# EUROPEAN PATENT APPLICATION

(11) **EP 3 522 047 A2**
(43) Date of publication of application: **07.08.2019**
(21) Application number: 19153311.6
(22) Date of filing: 23.01.2019
(51) Int. Cl.: G06F 17/50, B60R 16/02

(54) **DESIGN SUPPORT METHOD FOR WIRE HARNESS**

(30) Priority: 01.02.2018 JP 2018016409; 01.02.2018 JP 2018016774
(71) Applicant: Hitachi Metals, Ltd., Tokyo 108-8224 (JP)
(72) Inventor: KAWASE, Kenji, Tokyo, 108-8224 (JP); AOKI, Katsuju, Tokyo, 108-8224 (JP); YAMAMOTO, Raifu, Tokyo, 108-8224 (JP); NAMEKAWA, Masahiko, Tokyo, 108-8224 (JP)
(74) Representative: Seemann & Partner Patentanwälte mbB

(57) **Abstract**

A design support method for a wire harness (500) includes: a design step (S401, S402, S403, S404, S405, S406) of designing the wire harness including a plurality of wires (501) to be wired to a movable body and of creating design data of the wire harness (500), based on design data of the movable body and on wiring information regarding the plurality of wires; and a format conversion step (S111, S112, S113) of creating the wiring information based on basic wiring information regarding the plurality of wires and on a specified rule. Design data of the wire harness is created based on the design data of the movable body, the basic wiring information, and the specified rule, thus exerting an effect that designing of the wire harness can be facilitated.

## Description

### CROSS-REFERENCE TO RELATED APPLICATIONS

This application claims the benefit of Japanese Patent Applications Nos. 2018-016409 and 2018-016774, both filed on February 1, 2018 with the Japan Patent Office, the disclosures of which are incorporated herein by reference.

### BACKGROUND

The present disclosure relates to a design support method for a wire harness.

Movable bodies, such as vehicles and aircrafts, have a wire harness wired therein, which is a bundle of wires for conveying electric power, electric signals, and so on. Conventional operations of designing and manufacturing a wire harness and of wiring the manufactured wire harness in a desired position in the movable body (see, for example, Japanese Unexamined Patent Application Publication No. 2010-137649) have been difficult and time-consuming operations that require much skill.

### SUMMARY

The wire harness is designed based on wiring information (also referred to as a "From-To list"), in which multiple pieces of information on the wires included in the wire harness are listed, and other information. The wiring information includes, for example, information on devices to which the wires are to be connected.

However, there is no uniform standard in a description format of the wiring information (e.g., a position where the information is described, the order of description, and a symbol used in the description). In other words, some wiring information has a description format suitable for designing the wire harness, and other wiring information has a description format unsuitable for it. Thus, if the acquired wiring information has a description format unsuitable for designing the wire harness, there is a difficulty in designing the wire harness, which has been problematic.

In one aspect of the present disclosure, it is desirable to provide a design support method for a wire harness enabling facilitation of design of the wire harness.

A design support method for a wire harness according to one aspect of the present disclosure comprises: a design step of designing the wire harness comprising a plurality of wires to be wired to a movable body and of creating design data of the wire harness, based on design data of the movable body and on wiring information regarding the plurality of wires; and a format conversion step of creating the wiring information based on basic wiring information regarding the plurality of wires and on a specified rule.

In the design support method for the wire harness according to the above-described aspect, design data of the wire harness can be created based on the design data of the movable body, the basic wiring information, and the specified rule. In other words, the design data of the wire harness can be created by acquiring the basic wiring information having the format unsuitable for designing the wire harness and the specified rule, instead of the wiring information having the format suitable for designing the wire harness.

The design support method for the wire harness according to the above-described aspect exerts an effect of facilitating designing of the wire harness by creating the design data of the wire harness based on the design data of the movable body, the basic wiring information, and the specified rule.

### BRIEF DESCRIPTION OF THE DRAWINGS

An embodiment of the present disclosure will be described below by way of example with reference to the accompanying drawings, in which:
FIG. 1 is a block diagram illustrating a configuration of a wiring support system according to an embodiment of the present disclosure;
FIG. 2 is a block diagram illustrating a configuration of a design support apparatus;
FIG. 3 is a schematic diagram illustrating a configuration of a wire harness;
FIG. 4 is a diagram illustrating a vehicle body model generated based on three-dimensional CAD data;
FIG. 5 is a diagram illustrating a virtual space generated based on virtual space information;
FIG. 6 is a schematic diagram illustrating a configuration of a guide arranged in the virtual space;
FIG. 7 is a schematic diagram illustrating a mode in which a tolerance gauge is displayed;
FIG. 8 is a schematic diagram illustrating a configuration of a manufacturing support apparatus;
FIG. 9 is a flowchart illustrating a wiring support method for the wire harness by the wiring support system;
FIG. 10 is a subroutine flowchart illustrating a method of format conversion #1;
FIG. 11 is a subroutine flowchart illustrating a method of format conversion #2;
FIG. 12 is a subroutine flowchart illustrating a method of list creation;
FIG. 13 is a subroutine flowchart illustrating a method of virtual space generation;
FIG. 14 is a subroutine flowchart illustrating a method of wire routing;
FIG. 15 is a subroutine flowchart illustrating a method of weight check;
FIG. 16 is a subroutine flowchart illustrating a method of dimension adjustment;
FIG. 17 is a subroutine flowchart illustrating a method of harness design drawing creation;
FIG. 18 is a subroutine flowchart illustrating a method of coordinate transformation;
FIG. 19 is a subroutine flowchart illustrating a method of harness board drawing creation;
FIG. 20 is a subroutine flowchart illustrating a method of recipe confirmation;
FIG. 21 is a subroutine flowchart illustrating a method of wire harness manufacturing; and
FIG. 22 is a subroutine flowchart illustrating a method of wire harness wiring.

### DETAILED DESCRIPTION OF THE PREFERRED EMBODIMENTS

A total support system 1 of the present embodiment supports design, manufacture, and wiring of a wire harness 500 to be wired to a vehicle body of a railway vehicle (corresponding to an example of a movable body).

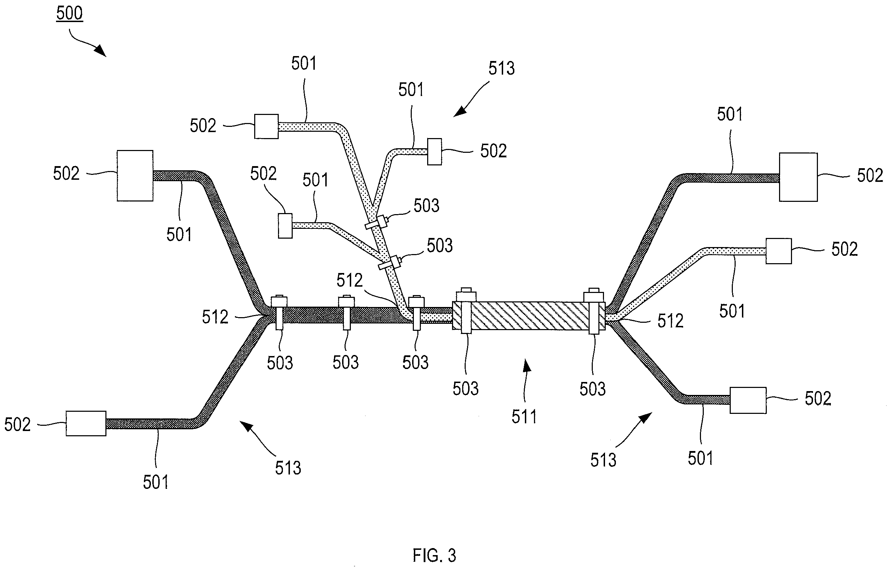

As shown in FIG. 3, the wire harness 500 has a configuration in which multiple wires 501 connecting devices mounted in the vehicle body of the railway vehicle are bundled. Each wire 501 is configured to convey electric power, electric signals, or the like between the connected devices. Attached to an end of the wire 501 is a connector 502 having a shape corresponding to the device to be connected thereto.

The wire harness 500 comprises a binder 503 that bundles and binds the multiple wires 501. Examples of the binder 503 usable may include an adhesive tape, a resin binding member such as a tube and a binding band, a metal binding member, and a waxed string. The binding member may contain a through-hole. Inserted into the through-hole is a fixing member, such as a bolt, used when fixing the wire harness 500 to the vehicle body of the railway vehicle.

In the present embodiment, the binder 503 may be an adhesive tape. In the wire harness 500, a portion where the multiple wires 501 are bundled is also referred to as a trunk line 511, a position where the wires 501 are branched from the trunk line 511 is also referred to as a branch point 512, and an extending portion divided from the trunk line 511 is also referred to as a branch line 513.

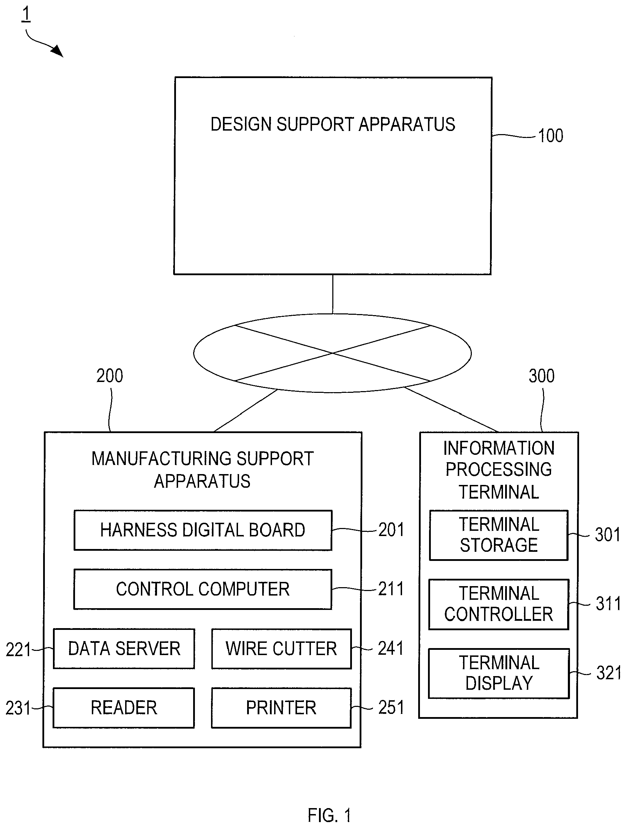

As shown in FIG. 1, the total support system 1 comprises a design support apparatus 100 supporting design of the wire harness 500, a manufacturing support apparatus 200 supporting manufacture of the wire harness 500, and an information processing terminal 300 supporting wiring of the wire harness 500. The design support apparatus 100 and the manufacturing support apparatus 200 are connected to each other in an information-communicable manner via a dedicated information-communication line or a known information-communication network. The design support apparatus 100 and the information processing terminal 300 are also connected to each other in a similar manner.

The design support apparatus 100 performs design of the wire harness 500 in a design space, which is a virtual space. The design support apparatus 100 is an information-processing device, such as a personal computer or a server, comprising a central processing unit (CPU), a ROM, a RAM, an input/output interface, and so on.

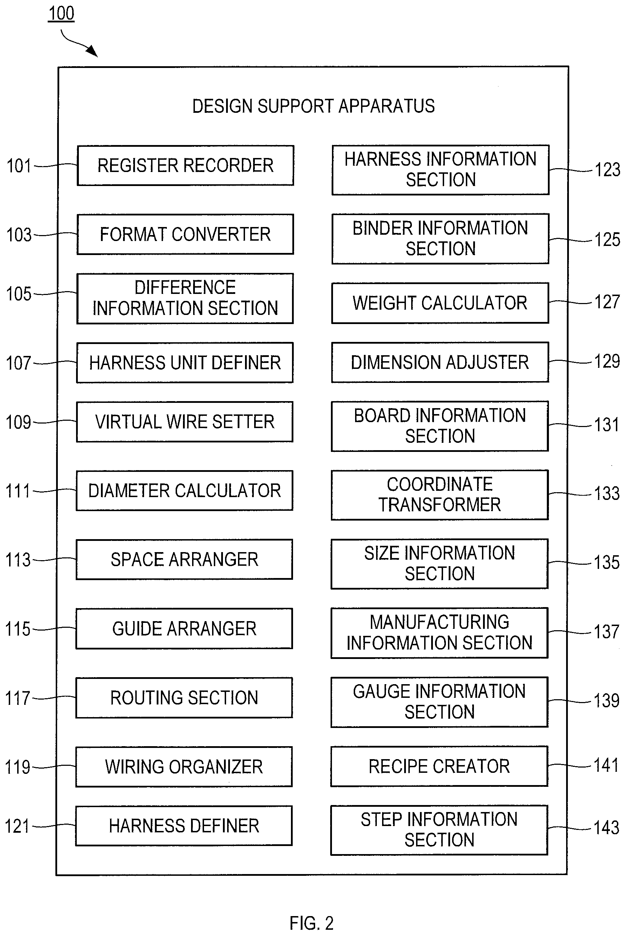

As shown in FIG. 2, a program or programs stored in a storage device such as the above-described ROM cause the CPU, the ROM, the RAM, and the input/output interface to cooperate to allow them to function as a register recorder 101, a format converter 103, a difference information section 105, a harness unit definer 107, a virtual wire setter 109, a diameter calculator 111, a space arranger 113, a guide arranger 115, a routing section 117, a wiring organizer 119, a wire harness definer 121 (hereinafter also referred to as a "harness definer 121"), a wire harness information section 123 (hereinafter also referred to as a "harness information section 123"), a binder information section 125, a weight calculator 127, a dimension adjuster 129, a harness digital board information section 131 (hereinafter also referred to as a "board information section 131"), a coordinate transformer 133, a size information section 135, a manufacturing information section 137, a gauge information section 139, a recipe creator 141, and a step information section 143.

The register recorder 101 performs a process of recording register information to be used for management of basic wiring information and wiring information. Specific details of the process of performing recordation to the register information will be described below. Details of the basic wiring information and the wiring information will be also described below.

The format converter 103 performs a process of acquiring the basic wiring information, a process of writing various pieces of information included in the basic wiring information to a master in accordance with a specified rule, and a process of writing project information and so on identifying design of the wire harness 500. Specific details of the processes will be described below.

The difference information section 105 performs a process of determining whether the various pieces of information included in the wiring information (new wiring information) used in a process of format conversion have been changed or added, with respect to the wiring information (previous wiring information) used before the process of the format conversion, and a process of recording difference information, which is the changed or added information, to the wiring information. Specific details of the processes will be described below.

The harness unit definer 107 performs a process of determining combination of the wires 501 to be bundled as the wire harness 500 from the multiple wires 501 included in the wiring information, based on at least one of area information or use information included in the wiring information. Specific details of the process will be described below.

The virtual wire setter 109 performs a process of generating a virtual wire, which is an imaginary wire configured with a bundle of the multiple wires 501. Details of the process of generating the virtual wire differ depending on whether the unit of such generation is based on devices or based on connectors. Specific details of the process will be described below.

The diameter calculator 111 performs a process of calculating the size (or specifically the diameter) of the virtual wire. The diameter of the virtual wire is calculated on the assumption that the multiple wires 501 included in the virtual wire are regarded as one wire. Specific details of the process will be described below.

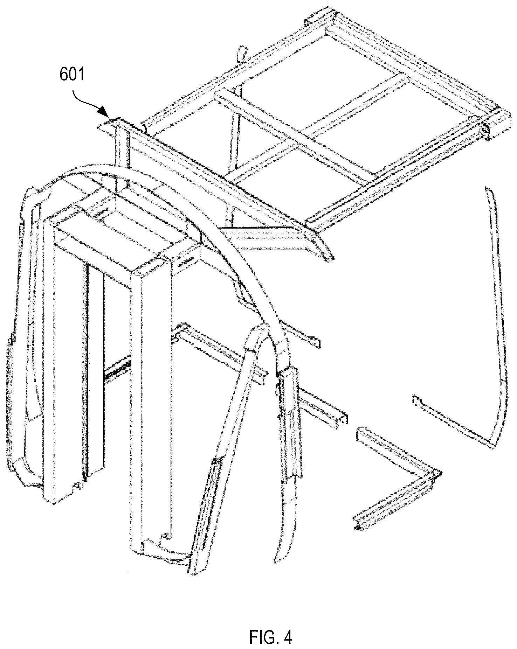

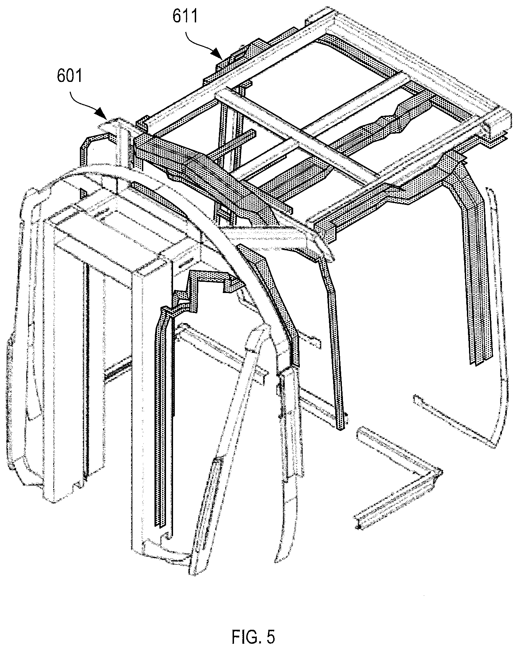

The space arranger 113 performs an arithmetic process for arranging a virtual space 611 (see FIG. 5), in which the wires 501 are arranged, to a vehicle body model 601 (see FIG. 4) generated in the design space, which is a virtual three-dimensional space. Details of the arithmetic process by the space arranger 113 will be described below.

The vehicle body model 601 is generated based on three-dimensional computer-aided design (CAD) data (3D design data). The three-dimensional CAD data includes at least component shape information regarding shapes of structural components constituting the vehicle body, component position information regarding positions where the structural components of the vehicle body are arranged, device position information regarding positions of the devices arranged in the vehicle body, and connecting location information regarding locations to which the wires 501 are connected on the devices.

The virtual space 611 is generated based on virtual space information. The virtual space 611 is an imaginary space set in the design space, and is set between the structural components constituting the vehicle body. FIG. 5 shows the virtual space 611 with dot-hatching.

The virtual space information includes at least space shape information regarding the shape of the virtual space 611, and space position information regarding the position where the virtual space 611 is arranged.

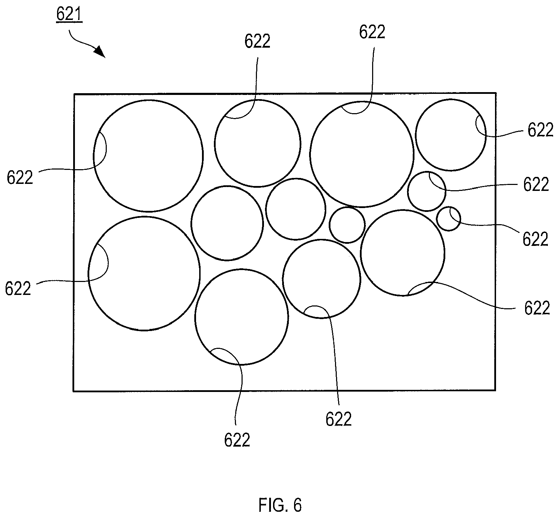

The guide arranger 115 performs an arithmetic process for arranging a guide 621 in the virtual space 611. Details of the arithmetic process by the guide arranger 115 will be described below. As shown in FIG. 6, the guide 621 is an imaginary plate-shaped member to be arranged in the virtual space 611. The guide 621 contains guide holes 622 through which the wires 501 are inserted. Insertion of the wires 501 through the guide holes 622 results in determining positions where the wires 501 are arranged. The wires 501 to be inserted through the guide holes 622 are determined when, for example, arranging the wires 501.

The shape of the guide 621 is not limited to that shown in FIG. 6, and may be determined based on a sectional shape of the virtual space 611 in which the guide 621 is arranged. Similarly, the size of the guide hole 622 may be determined based on the size of the wire 501 to be inserted therethrough. Positions where the guide holes 622 are arranged in the guide 621 may also be determined so that the multiple wires 501 forming the below-described wire harness 500 are adjacent to each other.

The routing section 117 performs an arithmetic process for creating wiring path information regarding paths where the wires 501 are arranged in the virtual space 611, based on the wiring information. Details of the arithmetic process by the routing section 117 will be described below. The wiring path information is also referred to as harness routing data. The wiring path information also includes graphic information indicating a three-dimensional shape of the wires 501 arranged in the design space.

The wiring information is also referred to as a From-To list. The wiring information includes at least device identifying information for identifying a device (not shown) to which the wire 501 is connected, information for identifying a type of the wire 501, length information indicating the length of the wire 501, tolerance information indicating a specified error range relative to a specified length value of the wire 501, size information indicating the size of the wire 501, and information on label characters to be assigned to the wire 501.

The above-described length information need not necessarily be included in the wiring information in an initial state. Instead of the above-described length information, information as a rough indication of the length of the wire 501 may be included in the wiring information.

If the above-described length information is not included in the wiring information, then length information of the wire 501 obtained by the below-described harness information section 123 is included in the wiring information as the above-described length information. If the information as the rough indication of the length is included in the wiring information, then the length information of the wire 501 obtained by the harness information section 123 is overwritten.

The initial state refers to a state from when the wiring information is created till when the length information of the wire 501 obtained by the harness information section 123 is included in the wiring information or overwritten.

The wiring organizer 119 performs an arithmetic process for organizing the wires 501 arranged in the virtual space 611. Details of the arithmetic process by the wiring organizer 119 will be described below.

The harness definer 121 performs an arithmetic process for defining the wire harness 500 by bundling the wires 501 to be arranged in the virtual space 611. Details of the arithmetic process by the harness definer 121 will be described below.

The harness information section 123 performs an arithmetic process for creating wire harness information (2D design data) of the defined wire harness 500. Details of the arithmetic process by the harness information section 123 will be described below. The created wire harness information is used for approval of the designed wire harness 500 and manufacture of the wire harness 500.

The binder information section 125 performs an arithmetic process for creating binder information including the length, or in other words a usage amount, of the binder 503 for use in the wire harness 500 based on the three-dimensional CAD data and the wire harness information. In the present embodiment, an example is described in which the binder 503 is an adhesive tape. The created binder information can be outputted as list-form data. Details of the arithmetic process by the binder information section 125 will be described below.

The weight calculator 127 performs a process of calculating the weight of the wire 501 for each type thereof and a process of calculating the total weight of the wire harness 500 based on the calculated weight of the wire 501 for each type thereof. Specific details of the processes will be described below.

The dimension adjuster 129 performs a process of creating new wiring path information by applying extra length, tolerance, and rounding to the wiring path information, and other processes. The rounding means processing fractions of a numerical value or the like. Specific details of the process will be described below.

The board information section 131 performs an arithmetic process for creating harness digital board information based on the wire harness information. The harness digital board information includes drawing information to be displayed on a harness digital board 201 to be described below.

The coordinate transformer 133 performs a process of converting information in which the branch line 513 extends obliquely with respect to the trunk line 511 into information in which the branch line 513 extends in a direction perpendicular to the trunk line 511. Specific details of the process will be described below.

The size information section 135 performs an arithmetic process for setting size information regarding the size of a board display 202 to be described below. The board display 202 is also a placement surface of the harness digital board 201 on which the wires 501 are placed when the wire harness 500 is manufactured.

The manufacturing information section 137 performs an arithmetic process for creating manufacturing information (information indicating a manufacturing method) including the drawing information to be used to manufacture the wire harness 500, based on the harness digital board information and the size information. The drawing information is displayed on the board display 202 of the harness digital board 201.

The gauge information section 139 performs an arithmetic process for creating gauge information regarding a tolerance gauge 631 based on the tolerance information included in the wiring information. The gauge information is information for displaying the tolerance gauge 631 on the board display 202, and the created gauge information is included in the drawing information.

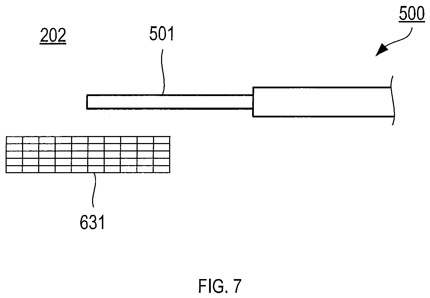

As shown in FIG. 7, the tolerance gauge 631 shows tolerable limits of the position where each of one end and the other end of the wire 501 is arranged when the wire 501 is arranged on the board display 202 of the harness digital board 201.

The recipe creator 141 performs a process of creating a manufacturing recipe based on the wiring information. The manufacturing recipe includes information used to fabricate the wire harness 500. The information relates to details, the order, and so on of the steps for manufacturing the wire harness 500.

The step information section 143 performs an arithmetic process for creating wiring step information corresponding to wiring steps for the wire harness 500, based on the wire harness information and the wiring information. The wiring step information enables display corresponding to the wiring steps for the wire harness 500 on a terminal display 321 of the information processing terminal 300. For example, the wiring step information enables display of the order of the branch lines 513 or the connectors 502 of the wire harness 500 to be wired, and enables highlighted display of the branch line 513 to be wired while displaying a three-dimensional drawing of the wire harness 500. The step information section 143 may perform an arithmetic process for creating the wiring step information based on the wiring path information. The step information section 143 may perform an arithmetic process for creating the wiring step information based on the wiring path information and harness three-dimensional information to be described below.

In the present embodiment, an example is described in which the design support apparatus 100 alone functions as the register recorder 101, the format converter 103, the difference information section 105, the harness unit definer 107, the virtual wire setter 109, the diameter calculator 111, the space arranger 113, the guide arranger 115, the routing section 117, the wiring organizer 119, the harness definer 121, the harness information section 123, the binder information section 125, the weight calculator 127, the dimension adjuster 129, the board information section 131, the coordinate transformer 133, the size information section 135, the manufacturing information section 137, the gauge information section 139, the recipe creator 141, and the step information section 143. Alternatively, these may be separately included in more than one design support apparatus 100.

Examples of such an alternative configuration may include a method in which a first design support apparatus 100 functions as the register recorder 101, the format converter 103, the difference information section 105, the harness unit definer 107, the virtual wire setter 109, the diameter calculator 111, the space arranger 113, the guide arranger 115, the routing section 117, the wiring organizer 119, the harness definer 121, the harness information section 123, the binder information section 125, the weight calculator 127, and the dimension adjuster 129, and a second design support apparatus 100 functions as the board information section 131, the coordinate transformer 133, the size information section 135, the manufacturing information section 137, the gauge information section 139, the recipe creator 141, and the step information section 143. The first design support apparatus 100 and the second design support apparatus 100 may be directly connected to each other in an information-communicable manner, or may be connected via a server in an information-communicable manner.

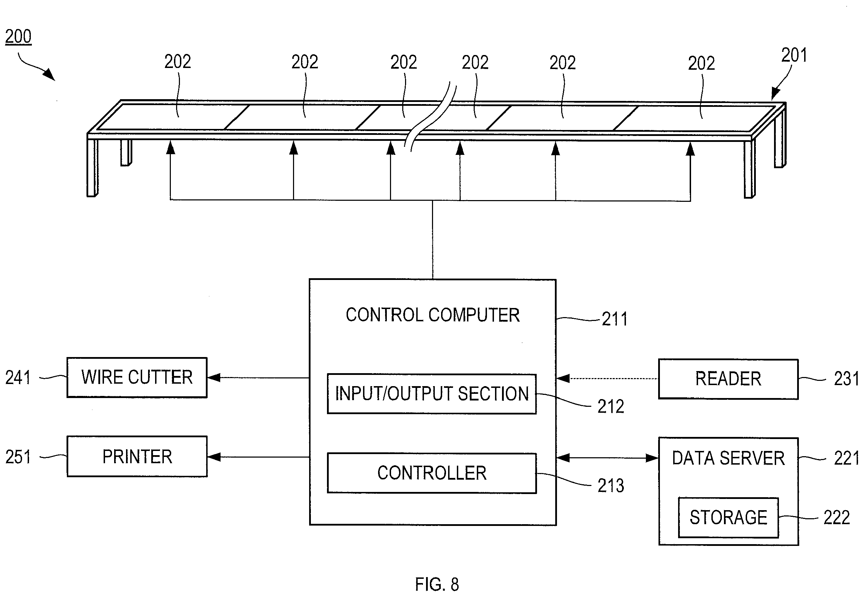

The manufacturing support apparatus 200 manufactures the wire harness 500. As shown in FIGS. 1 and 8, the manufacturing support apparatus 200 comprises the harness digital board 201, a control computer 211, and a data server 221 as main components. Further, the manufacturing support apparatus 200 also comprises devices used to manufacture the wire harness 500, such as a reader 231, a wire cutter 241, and a printer 251.

The harness digital board 201 is shaped like a table used to manufacture the wire harness 500. The harness digital board 201 comprises the board display 202, which is also a workbench on which the wire harness 500 is manufactured.

The board display 202 is a surface having the width and the length required for manufacturing the wire harness 500. The board display 202 is the surface on which the wire harness 500 is manufactured, and also a display surface on which the drawing information, which is digital information, is displayed. The board display 202 is connected to the control computer 211 in an information-communicable manner, and information on the drawing information to be displayed is transmitted to the board display 202 from the control computer 211. The control computer 211 may read the manufacturing information including the drawing information from the data server 221.

In the present embodiment, an example will be described in which the display surface of the board display 202 is a liquid crystal display. The display surface of the board display 202 is not limited to the liquid crystal display, and may be an organic electroluminescence (EL) display or may be a projection surface on which the drawing information is projected by a projector.

The reader 231 optically reads out an identifier such as a barcode displayed on the display surface of the board display 202. The reader 231 is connected to the control computer 211 in an information-communicable manner, and outputs information on the read-out identifier to the control computer 211.

In the present embodiment, an example will be described in which the reader 231 has portable size and weight and is connected to the control computer 211 in an information-communicable manner using a known wireless communication technology. As the identifier, those of known type and format may be used.

The wire cutter 241 cuts the wire 501 to be used to manufacture the wire harness 500 to a desired length set in advance. The wire cutter 241 is connected to the control computer 211 in an information-communicable manner, and cuts the wire 501 based on a control signal inputted from the control computer 211. The wire 501 to be cut is fed out from a supply reel (not shown).

The printer 251 prints on a label to be attached to the cut wire 501 or the wire harness 500. The label is used for identification of the wire 501 or other purposes. The printer 251 is connected to the control computer 211 in an information-communicable manner, and prints on the label based on information inputted from the control computer 211.

The control computer 211 controls display of the drawing information on the harness digital board 201. Further, the control computer 211 acquires information on control of other devices, such as the wire cutter 241 and the printer 251, used to manufacture the wire harness 500, and information on manufacturing of the wire harness 500, such as operation history and inspection results.

In the present embodiment, an example will be described in which the control computer 211 is an information-processing device, such as a personal computer comprising a CPU, a ROM, a RAM, an input/output interface, and so on.

As shown in FIG. 8, a program or programs stored in a storage device such as the above-described ROM cause the CPU, the ROM, the RAM, and the input/output interface to cooperate to allow them to function as an input/output section 212 and a controller 213.

The input/output section 212 is connected to the design support apparatus 100, the board display 202, the reader 231, the wire cutter 241, the printer 251, and the data server 221 in an information-communicable manner. In the present embodiment, an example will be described in which the input/output section 212 is connected to the board display 202, the wire cutter 241, the printer 251, and the data server 221 so that wired information communication can be performed by a known method using a local area network (LAN) cable or the like and in which the input/output section 212 is connected to the reader 231 so that wireless information communication can be performed by a known method, such as wireless LAN communication. As for the connection to the design support apparatus 100, an example of information-communicable connection using a known information-communication network will be described.

The controller 213 generates control signals for controlling operations of the board display 202, the wire cutter 241, and the printer 251. Further, the controller 213 stores the information on manufacturing of the wire harness 500, such as the operation history and inspection results, in the data server 221.

The data server 221 is connected to the control computer 211 in an information-communicable manner via an information-communication network formed by a LAN cable and so on. In the present embodiment, an example will be described in which the data server 221 is an information-processing device, such as a server comprising a CPU, a ROM, a RAM, an input/output interface, and so on.

As shown in FIG. 8, a program or programs stored in a storage device such as the above-described ROM cause the CPU, the ROM, the RAM, and the input/output interface to cooperate to allow them to function as a storage 222. The storage 222 stores the information on manufacturing of the wire harness 500, such as the operation history and inspection results, acquired by the control computer 211. The storage 222 also may store the manufacturing information including the drawing information.

The information processing terminal 300 displays information for supporting wiring of the wire harness 500. In the present embodiment, an example will be described in which the information processing terminal 300 is a tablet-type or notebook-type information-processing device comprising a CPU, a ROM, a RAM, an input/output interface, and so on, which is mobile and portable by an operator.

As shown in FIG. 1, a program or programs stored in a storage device such as the above-described ROM cause the CPU, the ROM, the RAM, the input/output interface, and so on to cooperate to allow them to function as a terminal storage 301, a terminal controller 311, and the terminal display 321.

The terminal storage 301 stores the wiring step information and the wiring path information acquired from the design support apparatus 100. The terminal controller 311 performs control for displaying the wiring step information and the wiring path information corresponding to the wiring steps for the wire harness 500. Details of the control by the terminal controller 311 will be described below.

The terminal display 321 displays the wiring step information and the wiring path information to the operator who performs wiring. The terminal display 321 is also an inputter, such as a touch screen, through which the operator's manipulation to the information processing terminal 300 is inputted. In the present embodiment, an example will be described in which the terminal display 321 is a combination of a liquid crystal display and the touch screen.

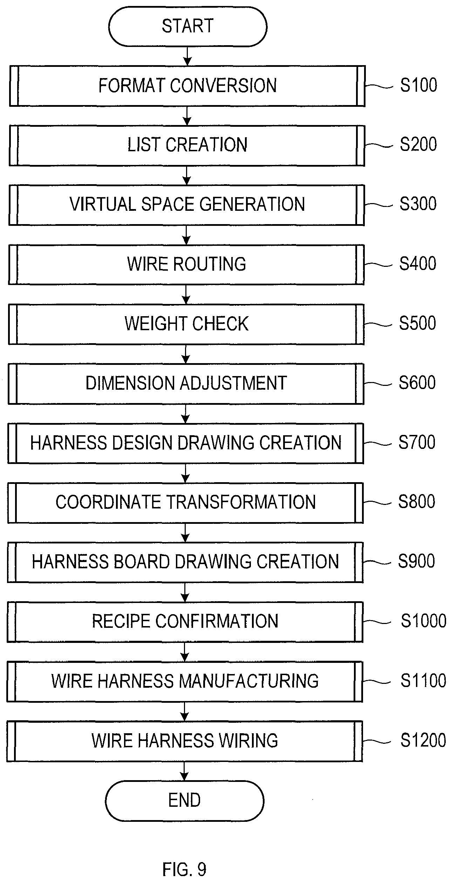

Next, an explanation will be given of a total support method for the wire harness 500 in the total support system 1 configured as above, with reference to FIGS. 9 to 22. As shown in FIG. 9, upon start of wiring support for the wire harness 500 in the total support system 1 of the present embodiment, the design support apparatus 100 performs a process of format conversion (S100).

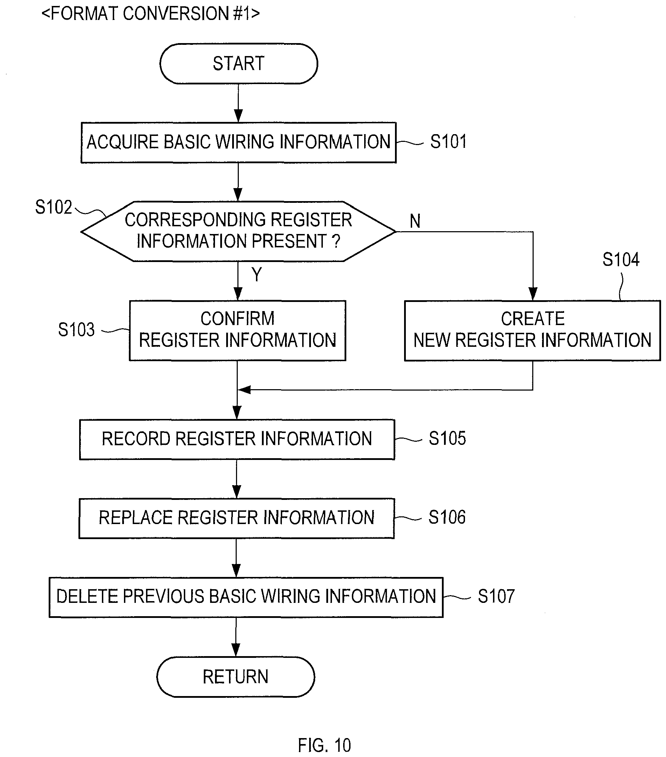

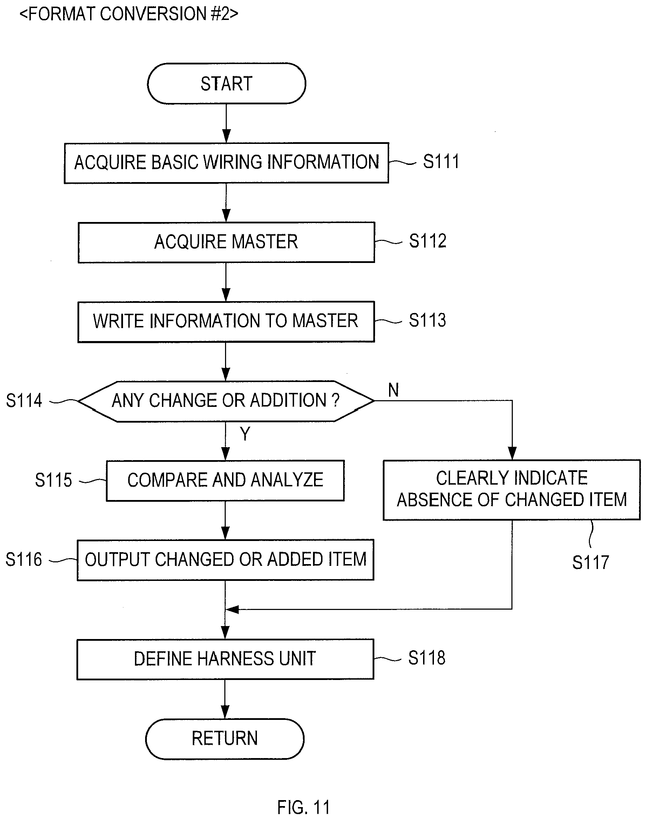

As shown in FIGS. 10 and 11, the design support apparatus 100 performs a below-described process as the format conversion. In the present embodiment, a flowchart indicating details of a process of format conversion #1 in FIG. 10 will be described first, and a flowchart indicating details of a process of format conversion #2 in FIG. 11 will be described next.

The flowcharts shown in FIGS. 10 and 11 are interrelated, and the processes therein may be performed concurrently or may be performed separately. Either of the processes in the flowcharts shown in FIGS. 10 and 11 may be performed first. The order of performing the processes is not limited in particular.

First, as shown in FIG. 10, the design support apparatus 100 performs a process of acquiring the basic wiring information (S101). The design support apparatus 100 transmits a signal requesting output of the basic wiring information, to a server or the like in which the basic wiring information is stored in advance. The basic wiring information outputted in response to the signal requesting such output is inputted to the design support apparatus 100 and stored therein.

The basic wiring information includes information on the wire 501 similarly to the wiring information. However, the basic wiring information differs from the wiring information in terms of a description method, a listing order, and so on of the information on the wire 501. The description method and the listing order of the information on the wire 501 in the basic wiring information are not limited in particular.

Upon acquisition of the basic wiring information, the design support apparatus 100 performs a process of determining whether the register information corresponding to the acquired basic wiring information is present (S102). As a method for such a determination process, a known method may be employed, and specific details of such determination process are not limited.

Recorded in the register information are management information, such as a reference number, used for management of the basic wiring information and the wiring information, acquisition date and time of each of the basic wiring information and the wiring information, date and time when the format conversion was performed, information on a user who performed the format conversion, and so on. When performing the determination process of S102, the design support apparatus 100 also performs a process of creating and storing a copy of the acquired basic wiring information.

If it is determined that the corresponding register information is present (S102: YES), then the design support apparatus 100 performs a process of confirming the register information (S103). The case where the corresponding register information is present means that the basic wiring information to be determined has been acquired more than once and that the register information has been already created prior to the determination process of S102.

If it is determined that the corresponding register information is not present (S102: NO), then the design support apparatus 100 performs a process of creating new register information (S104). The case where the corresponding register information is not present means that the basic wiring information to be determined is acquired for the first time and that the register information has not been created prior to the determination process of S102. An example of the new register information created in the present process may be a format formed of blank fields or the like to be filled in with various pieces of information.

Upon completion of the process of S103 or the process of S104, the register recorder 101 of the design support apparatus 100 performs a process of recording the register information (S105: creation information step). Examples of contents to be recorded in the register information may be the management information to be newly added to the acquired basic wiring information, the acquisition date and time, and the date and time when the format conversion was performed. The management information is also information to be written in a writing process of S113 to be described below.

Upon completion of the process of recording the register information, the design support apparatus 100 performs a process of replacing the register information (S106). Specifically, the design support apparatus 100 performs a process of replacing the register information created prior to the process of S105 in the present format conversion process with the register information recorded in S105. Upon completion of the process of replacing the register information, the design support apparatus 100 performs a process of deleting the basic wiring information acquired prior to the present format conversion process (S107).

Meanwhile, as shown in FIG. 11, the format converter 103 of the design support apparatus 100 performs a process of acquiring the basic wiring information (S111: format conversion step). Then, the format converter 103 performs a process of acquiring the master (S112: format conversion step). The master as used herein is a master relating to the wiring information used for design of the wire harness 500 in the total support system 1. More specifically, the master means a format formed of blank fields or the like to be filled in with various pieces of information included in the wiring information.

Upon completion of the process of acquiring the basic wiring information and the master, the format converter 103 performs a process of writing information to the master (S113: format conversion step). Specifically, the format converter 103 performs the process of writing the various pieces of information included in the basic wiring information to the master in accordance with a specified rule, and the process of writing project information and so on identifying design of the wire harness 500. The master to which these pieces of information are written is also the wiring information.

Here, the rule is conversion rule data for converting the basic wiring information into the wiring information. There are a plurality of the rules according to types of the formats (formality such as a listing order of the various pieces of information) of the basic wiring information. Contents (format) of the basic wiring information are identified, and the rule corresponding to the identified format is selected from the plurality of rules and used.

Upon completion of the process of writing the information to the master, the difference information section 105 of the design support apparatus 100 performs a process of determining whether the wiring information written in S113 has been changed or added (S114). The case where the wiring information is determined to have been changed or added is a case where the various pieces of information included in the wiring information (new wiring information) used in the present format conversion process have been changed or added with respect to the wiring information (previous wiring information) used before the present format conversion process.

If it is determined that some change or addition has occurred (S114: YES), then the difference information section 105 performs the process of recording the difference information, which is the changed or added information, to the wiring information and also comparing and analyzing the changed or added information (S115). The wiring information may include information common between the previous wiring information and the new wiring information, and the difference information, or may include only the difference information.

The difference information is obtained by comparing the new wiring information with the previous wiring information based on specified analysis conditions. Pieces of information included in the difference information are organized in accordance with a specified format, and arranged.

Then, the difference information section 105 performs a process of outputting the changed or added item (the difference information) (S116). The outputted difference information is recorded in, for example, a register.

In the determination process of S114, if it is determined that no change or addition has occurred (S114: NO), then the difference information section 105 performs a process of clearly indicating absence of a changed item (S117). Specifically, the difference information section 105 performs a process of adding information to the effect that no change has occurred, to the wiring information.

Subsequently, the harness unit definer 107 of the design support apparatus 100 performs a process of defining the unit of the wire harness 500 (S118: harnessing determination step and identification information addition step). Specifically, the harness unit definer 107 performs a process of determining combination of the wires 501 to be bundled as the wire harness 500 from the multiple wires 501 included in the wiring information, based on at least one of the area information or the use information included in the wiring information.

Here, the area information is information specifying an area where a device to which the wire 501 is connected is mounted, and the use information is information specifying the use type of each wire 501 (e.g., an AC wire, a DC wire, and a shield wire).

In the case where the area information is to be based on, it is possible to determine the combination of the wires 501 to be bundled as the wire harness 500 in view of the place where the wire harness 500 is to be wired. Examples of such a place may include the train car number of the railway vehicle and the side (right or left) of the vehicle body. In the case where the use type of each wire 501 is to be based on, it is possible to bundle only the AC wires, only the DC wires, and/or only the shield wires as the wire harness 500.

Upon completion of the process of the format conversion #1 shown in FIG. 10 and the process of the format conversion #2 shown in FIG. 11, the design support apparatus 100 of the total support system 1 returns to the flow shown in FIG. 9, and performs a process of creating a list to be used when performing automatic wiring on the three-dimensional CAD (S200). Here, the automatic wiring means connecting the starting point (From), which is one end of the wire 501, to the end point (To), which is the other end of the same.

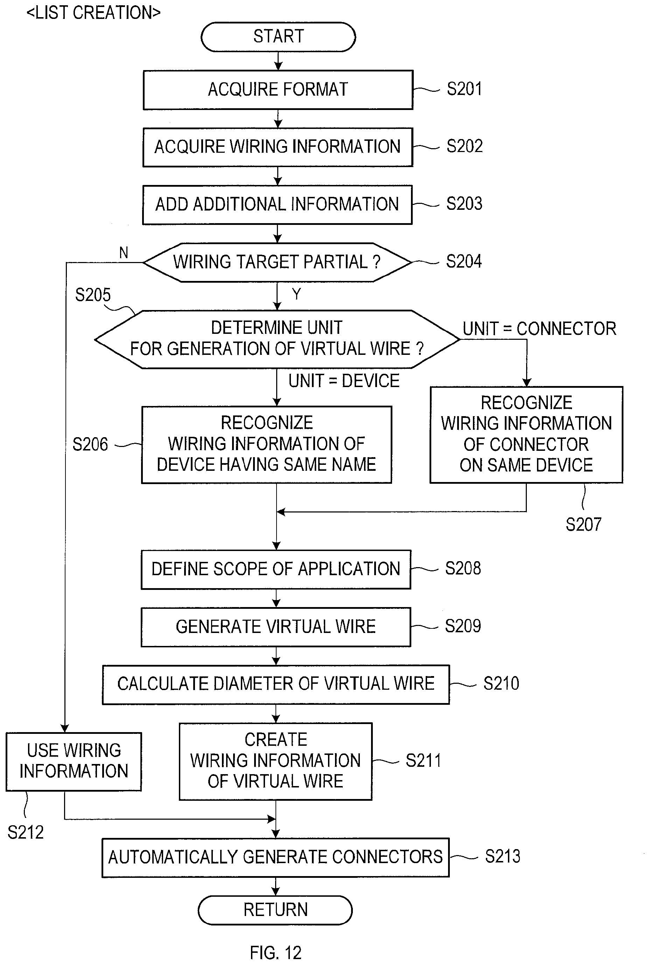

As shown in FIG. 12, the design support apparatus 100 performs a process of acquiring a format of the list (S201). Then, the design support apparatus 100 performs a process of acquiring the wiring information of the target wire harness 500 (S202).

Subsequently, the design support apparatus 100 performs a process of adding additional information (S203). Here, the additional information includes information on covering, information on a cross-section type, information on color, information on the diameter, information on the acceptable curvature, and so on, of the wire 501.

Further, the design support apparatus 100 performs a process of determining whether a wiring target is a part of the multiple wires 501 included in the acquired wiring information (S204).

If it is determined that the wiring target is a part of the multiple wires 501 included in the acquired wiring information (S204: YES), then the design support apparatus 100 performs a process of determining whether a unit for generation of the virtual wire is based on devices or based on connectors (S205).

Here, the virtual wire is a unit of the wires 501 to be wired collectively, or a bundle of the wires 501. For example, if the virtual wire is generated based on devices, then the multiple wires 501 connecting a first device A to a second device G are bundled, thus generating one virtual wire.

If it is determined that the unit for generation of the virtual wire is based on devices, then the design support apparatus 100 performs a process of recognizing the wiring information of the device having the same name (S206). On the other hand, if it is determined that the unit for generation of the virtual wire is based on connectors, then the design support apparatus 100 performs a process of recognizing the wiring information of the connector on the same device (S207).

Next, the design support apparatus 100 performs a process of defining a scope of application where generation of the virtual wire is performed (S208). In other words, the design support apparatus 100 performs a process of defining a group of the wires 501 for generation of the virtual wire. At this time, a determination is made on whether the scope of application needs to be modified. If such modification is necessary, then the design support apparatus 100 performs a process of modifying the scope of application. If such modification is not necessary, then the process proceeds to the next step.

Upon defining the scope of application of the virtual wire, the virtual wire setter 109 of the design support apparatus 100 performs a process of generating the virtual wire (S209: virtual wire setting step). Specifically, in the determination process of S205, if it is determined that the unit for generation of the virtual wire is based on devices, then the virtual wire setter 109 performs a process of collectively bundling the wire 501 connecting a connector B of the first device A to a connector H of the second device G and the wire 501 connecting a connector C of the first device A to a connector J of the second device G, thus generating one virtual wire.

On the other hand, if it is determined that the unit for generation of the virtual wire is based on connectors in the determination process of S205, then the virtual wire setter 109 performs a process of generating, as separate virtual wires, the wire 501 connecting the connector B of the first device A to the connector H of the second device G, and the wire 501 connecting the connector C of the first device A to the connector J of the second device G. The wiring information may include a symbol, such as a character, code, and number, assigned to each device in order to identify the device to which the corresponding wire 501 is to be connected.

Upon completion of the process of generating the virtual wire, the diameter calculator 111 of the design support apparatus 100 performs a process of calculating the diameter of the virtual wire (S210: diameter calculation step). Specifically, the diameter calculator 111 performs a process of acquiring the size information regarding the size (diameter or radius) of the wire 501 from the wiring information, and then performs a process of calculating the diameter of the virtual wire based on the acquired size information. The diameter of the virtual wire is calculated on the assumption that the multiple wires 501 included in the virtual wire are one wire.

Upon calculation of the diameter of the virtual wire, the design support apparatus 100 performs a process of creating the wiring information of the virtual wire (S211). The wiring information is created based on the format acquired in S201.

In the determination process of S204, if it is determined that the wiring target is not a part of the multiple wires 501 but the entirety of the multiple wires 501 (S204: NO), then the design support apparatus 100 performs a process of using the wiring information to which the additional information acquired in S203 has been added (S212).

Subsequently, the design support apparatus 100 performs a process of automatically generating connectors (S213: connector data creation step). Specifically, if the unit for generation of the virtual wire is based on devices, then the design support apparatus 100 performs a process of automatically creating connector files such that a connector file name (connection-target device information) of a starting-point (From) as one end of the virtual wire includes the name of the device to be connected, and such that a connector file name (connection-target device information) of an end-point (To) as the other end includes the name of the device to be connected. On the other hand, if the unit for generation of the virtual wire is based on connectors, then the design support apparatus 100 performs a process of automatically creating connector files such that the connector file name of the starting-point (From) as one end of the virtual wire includes the names of the device and the connector to be connected, and such that the connecter file name of the end-point (To) as the other end includes the names of the device and the connector to be connected.

If the virtual wire is not to be generated, then connector files are created such that the connector file name of the starting-point (From) as one end of the wire 501 includes the names of the device and the connector to be connected, and such that the connector file name of the end-point (To) as the other end includes the names of the device and the connector to be connected.

Upon completion of the process of list creation shown in FIG. 12, the design support apparatus 100 returns to the flow shown in FIG. 9, and performs a process of virtual space generation (S300).

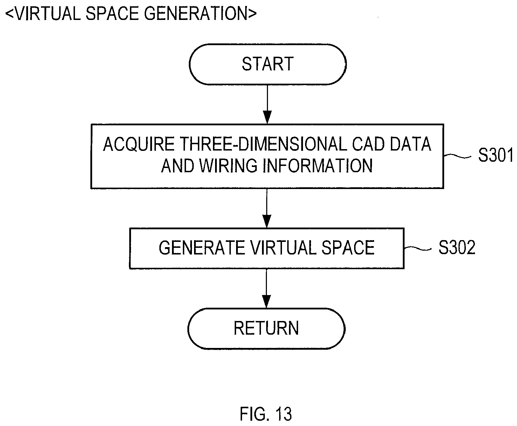

The design support apparatus 100 performs a below-described process as the process of virtual space generation. First, as shown in FIG. 13, the design support apparatus 100 performs a process of acquiring the three-dimensional CAD data and the wiring information (S301). The design support apparatus 100 transmits a signal requesting output of the three-dimensional CAD data and the wiring information, to the server or the like, in which the three-dimensional CAD data and the wiring information are stored in advance. The three-dimensional CAD data and the wiring information outputted in response to the signal requesting such output are inputted to the design support apparatus 100 and stored therein.

Upon acquisition of the three-dimensional CAD data and the wiring information, the design support apparatus 100 performs a process of generating the virtual space 611 based on component information of the vehicle body model 601 (S302). The shape of the virtual space 611 is determined with reference to the vehicle body model 601. For example, the virtual space 611 is arranged between the structural components constituting the vehicle body of the vehicle. Further, the virtual space 611 is arranged in a position that enables the wires 501 to be connected to the devices mounted in the vehicle body.

The design support apparatus 100 creates the virtual space information including the space shape information regarding the shape of the virtual space 611, and the space position information regarding the position where the virtual space 611 is arranged.

The generated virtual space 611 is checked in terms of presence/absence of interference with the vehicle body, and so on. Upon confirmation of absence of such interference, the process of virtual space generation ends. The design support apparatus 100 of the total support system 1 returns to the flow shown in FIG. 9, and performs a process of wire routing (S400).

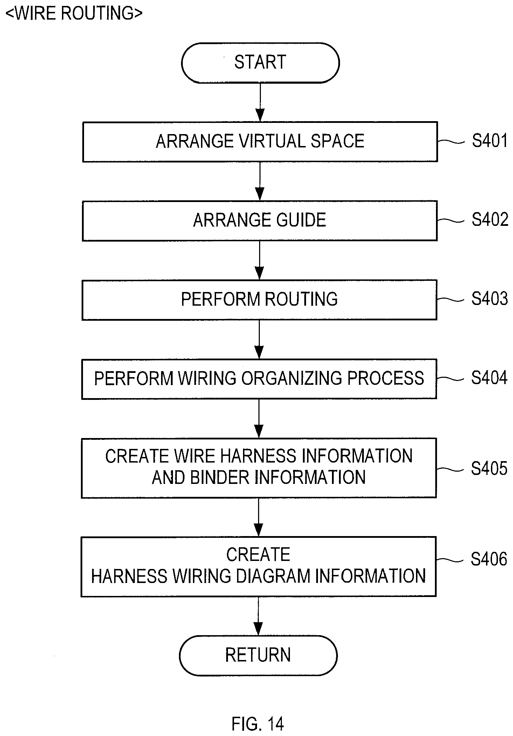

As shown in FIG. 14, the design support apparatus 100 performs a below-described process as the process of wire routing. First, the space arranger 113 of the design support apparatus 100 performs a process of arranging the vehicle body model 601 and the virtual space 611 in the design space (S401: 3D design step). The vehicle body model 601 is generated in the design space based on the three-dimensional CAD data. The virtual space 611, which has been certified in the process of virtual space generation of S300, is generated in the design space based on the virtual space information.

Upon arrangement of the vehicle body model 601 and the virtual space 611, the guide arranger 115 of the design support apparatus 100 performs a process of arranging the guide 621 in the virtual space 611 (S402: 3D design step). Examples of the position where the guide 621 is arranged may include a bent portion of the virtual space 611, a branch point where the virtual space 611 is branched, and a vicinity of a tapered part where a cross-sectional area of the virtual space 611 is increased or decreased.

A process of setting the shape of the guide 621, and the size and an arrangement position of each guide hole 622, may be performed concurrently with the process of arranging the guide 621, or may be performed prior to the process of S402. If the process of setting the shape of the guide 621 and so on is performed prior to the process of S402, then a computer other than the design support apparatus 100 may perform such a setting process. In this case, the shape of the guide 621 and so on set in the setting process are inputted to the design support apparatus 100 when performing the process of S402.

Upon arrangement of the guide 621, the routing section 117 of the design support apparatus 100 performs routing, which is a process of wiring the wires 501 in the virtual space 611 (S403: 3D design step). The routing is also referred to as a three-dimensional wiring design. The wiring path information including the graphic information indicating the three-dimensional shape of the wires 501 is created by the routing and a wiring organizing process to be described below.

The process of wiring the wires 501 is performed based on the device identifying information included in the wiring information, the device position information and the connecting location information included in the three-dimensional CAD data, and so on. Specifically, a device to be connected to the starting point (From), which is one end of the wire 501, and a device to be connected to the end point (To), which is the other end, are identified based on the wiring information. Further identified are respective positions where the identified device on the starting-point side and the identified device on the end-point side are arranged, and a location where the wire 501 is to be connected on each device. The routing section 117 performs the process of wiring the wires 501 such that the wires 501 are connected to the identified devices via the virtual space 611. At this time, each wire 501 is inserted through the corresponding guide hole 622 in the guide 621.

Upon completion of the routing, the wiring organizer 119 of the design support apparatus 100 performs the wiring organizing process (S404: 3D design step). Performed in the wiring organizing process are an adjustment process for a case in which the virtual space 611 does not entirely accommodate the wires 501, and a process of organizing the wires 501 arranged in a bent part or a linearly extending part of the virtual space 611. First, the adjustment process for the case in which the virtual space 611 does not entirely accommodate the wires 501 will be described.

The wiring organizer 119 performs determination on whether the virtual space 611 accommodates the wires 501 as below. First, the wiring organizer 119 acquires an arrangement portion shape, which is a shape of the virtual space 611 in a specified area thereof to be subjected to determination, based on the virtual space information. The wiring organizer 119 also acquires a wire shape, which is the shape of the wires 501 arranged in the specified area, based on the wiring information. Then, the wiring organizer 119 determines whether the wires 501 interfere with a boundary plane, which is an interface between the inside and the outside of the virtual space 611, in the specified area, based on the arrangement portion shape and the wire shape. If the wires 501 interfere with the boundary plane, then it is determined that the virtual space 611 cannot accommodate the wires 501. If the wires 501 do not interfere with the boundary plane, then it is determined that the virtual space 611 can accommodate the wires 501.

If it is determined that the virtual space 611 cannot accommodate the wires 501, then the wiring organizer 119 performs at least one of the below-described wiring organizing processes. If it is determined that the virtual space 611 in the specified area accommodates the wires 501, then the wiring organizer 119 does not perform any of these wiring organizing processes.

In a first wiring organizing process, the virtual space 611 in the specified area determined not to entirely accommodate the wires 501 is enlarged. A specified spare space is secured between the vehicle body model 601 and the virtual space 611, and the wiring organizer 119 performs the process of enlarging the specified area of the virtual space 611 toward the specified spare space.

In a second wiring organizing process, a part of the wires 501 determined not to be accommodated in the virtual space 611 in the specified area is diverted to another wiring route. In other words, the wiring organizer 119 performs a process of diverting such part of the wires 501 to an area of the virtual space 611 other than that determined not to entirely accommodate the wires 501.

In a third wiring organizing process, arrangement positions of the arranged wires 501 are changed in the determined area of the virtual space 611. In a case where the multiple wires 501 having different sizes are arranged in the virtual space 611, it is determined, in some cases, that the virtual space 611 does not accommodate all of the wires 501 due to wide space therebetween. In this case, reduction of the space between the wires 501 by changing the arrangement positions of the wires 501 may enable the virtual space 611 to accommodate all of the wires 501.

A fourth wiring organizing process is performed if it is determined that the virtual space 611 does not entirely accommodate the wires 501 even after the first to third wiring organizing processes are performed. In the present fourth wiring organizing process, the shapes of the structural components constituting the vehicle body of the vehicle and/or arrangement of the devices to be connected with the wires 501 are changed. The change of the shapes of the structural components enables a change to enlarge the virtual space 611, thus enabling the virtual space 611 to accommodate all of the wires 501. The change of arrangement of the devices changes the routes where the wires 501 are arranged, thus enabling the virtual space 611 to accommodate all of the wires 501.

The first to fourth wiring organizing processes may be performed when the wiring organizer 119 determines that the virtual space 611 does not entirely accommodate the wires 501 as described above, or may be performed when the operator enters a command to do so.

Next, an explanation will be given of the process of organizing the wires 501 arranged in the bent part or the linearly extending part of the virtual space 611. In the present embodiment, an example will be described in which such process is performed when the operator enters the command to do so. Alternatively, the wiring organizer 119 may determine whether to perform the process.

Upon entry of the command to perform the process by the operator, the wiring organizer 119 performs a process of organizing an arrangement state of the wires 501. For example, the wiring organizer 119 performs a process of arranging the wires 501 parallel to the central line of the virtual space 611, and/or a process of adjusting a distance between the adjacent wires 501 within a desired range.

Upon completion of the wiring organizing process, the design support apparatus 100 performs a process of creating the wire harness information and the binder information (S405: 3D design step). First, the harness definer 121 of the design support apparatus 100 performs a process of defining the wire harness 500. Then, the harness information section 123 performs the process of creating the wire harness information, and the binder information section 125 performs a process of creating the binder information.

The harness definer 121 performs the arithmetic process for defining the wire harness 500 by bundling a specified number of the wires 501. The specified number of wires 501 are selected in accordance with a specified rule from the multiple wires 501 arranged in the virtual space 611.

Examples of the specified rule may include: limiting the number of the wires 501 to be bundled as the wire harness 500 up to, for example, one hundred; bundling the wires 501 to be connected to the same device as the wire harness 500; and selecting the wires 501 to be bundled as the wire harness 500 based on electrical type. Examples of a selection method based on the electrical type may include selecting the wires 501 having the same type (e.g., an AC wire, a DC wire, and a shield wire).

Upon completion of the process of defining the wire harness 500, the harness information section 123 performs a process of creating the wire harness information based on the harness three-dimensional information, which is information on a three-dimensional shape of the wire harness 500. Here, the harness three-dimensional information is based on the wiring path information of the wires 501 constituting the wire harness 500.

The wire harness information is information regarding the shape of the wire harness 500, such as length information of the trunk line 511 of the wire harness 500, position information of the branch point 512, and length information of the branch line 513. The wire harness information also includes information enabling the wire harness 500 to be represented in a two-dimensional drawing.

Furthermore, the wire harness information includes information on the wires 501 constituting the wire harness 500, such as information for identifying the wires 501 constituting the wire harness 500, the length information of the wires 501, the size information of the wires 501, and information for identifying the wires 501 constituting the branch line 513.

The binder information section 125 performs the arithmetic process for creating the binder information based on the three-dimensional CAD data, the wire harness information, and so on. The binder information includes the length, or in other words the usage amount, of the adhesive tape, which is the binder 503 for use in the wire harness 500.

First, the binder information section 125 acquires binder arrangement information regarding a binding position where the multiple wires 501 are bundled and bound, a type of the binder 503 used for binding, and the number of turns, which is the number of times of winding the binder 503 in the binding position. These pieces of information may be inputted by the operator, or those stored in advance may be acquired.

The binder information section 125 performs a process of calculating the outside diameter of a bundle of the wires 501 (i.e., the wire harness 500) in the binding position based on the information on the binding position and the size information of each wire 501.

Upon calculation of the value of the outside diameter, the binder information section 125 performs a process of multiplying the value of the outside diameter by the number of turns. Such multiplication results in obtaining the length (i.e., the usage amount) of the binder 503 to be used in the binding position. The process of obtaining the usage amount is performed for each binding position.

Upon obtaining the usage amount of the binder 503 in every binding position in the wire harness 500, the binder information section 125 creates the binder information including information for identifying the wire harness 500, the information on the binding position, and the information on the type, the number of turns, the usage amount, and so on of the binder 503. The binder information is created as outputtable data having a known format.

Upon creation of the binder information, the design support apparatus 100 performs a process of creating harness wiring diagram information (2D design data) (S406: 2D design step). The harness wiring diagram information, which is information on the two-dimensional drawing of the wire harness 500, is drawing information indicating how the wire harness 500 is wired with respect to the vehicle body.

Upon completion of the process of wire routing shown in FIG. 14, the design support apparatus 100 returns to the flow shown in FIG. 9, and performs a process of weight check (S500).

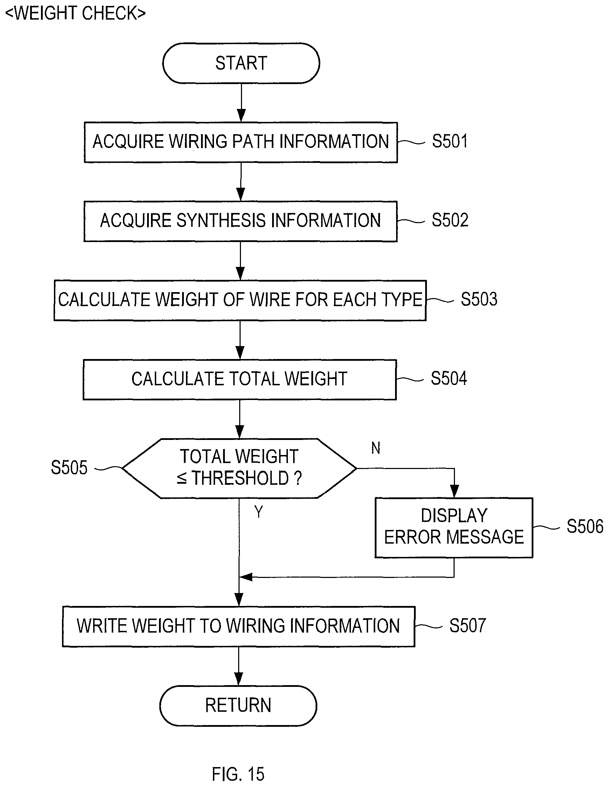

As shown in FIG. 15, the design support apparatus 100 performs a process of acquiring the wiring path information (the harness routing data) (S501). Specifically, the design support apparatus 100 performs a process of acquiring at least wiring length information included in the wiring path information.

Upon completion of the process of acquiring the wiring path information, the design support apparatus 100 performs a process of acquiring synthesis information (S502). The synthesis information as used herein is information on the diameter of the virtual wire calculated in generating the virtual wire, and on the diameter of each wire 501 included in the virtual wire.

Then, the weight calculator 127 of the design support apparatus 100 performs a process of calculating the weight of the wire 501 for each type (S503). Specifically, the weight calculator 127 performs a process of acquiring information on the weight (e.g., the weight per unit length) of the wire 501 and calculating the weight based on the thus-acquired information and the wiring length information acquired in S501.

Upon calculation of the weight of the wire 501 of each type, the weight calculator 127 performs a process of calculating the total weight of the wire harness 500 (S504). Subsequently, the design support apparatus 100 performs a process of determining whether the calculated total weight is equal to or less than a specified threshold (S505). The threshold is determined in consideration of work burden to be borne by the operator who performs wiring of the wire harness 500. Examples of the threshold may include, for example, 20 kg or less.

If it is determined that the total weight is not equal to or less than the threshold (S505: NO), then the design support apparatus 100 performs a process of displaying an error message (S506).

Upon display of the error message, or if it is determined that the total weight is equal to or less than the threshold (S505: YES), the design support apparatus 100 performs a process of writing the weight to the wiring information (S507).

Upon completion of the process of weight check shown in FIG. 15, the design support apparatus 100 returns to the flow shown in FIG. 9, and performs a process of dimension adjustment (S600).

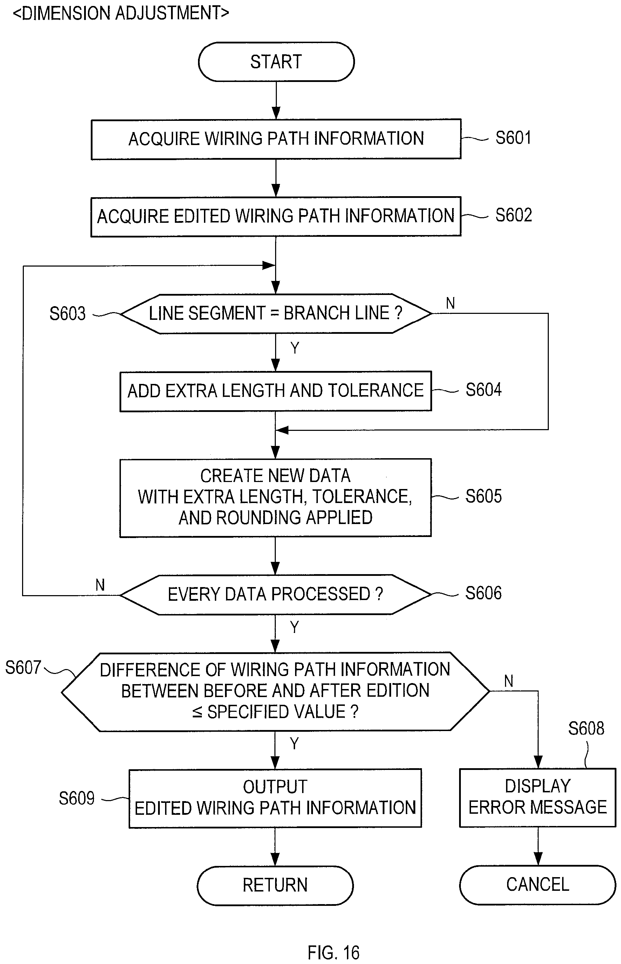

As shown in FIG. 16, the design support apparatus 100 performs a process of acquiring the wiring path information (the harness routing data) (S601). Specifically, the design support apparatus 100 performs a process of acquiring at least information on branching, information on a section length, and so on, included in the wiring path information.

Next, the design support apparatus 100 performs a process of acquiring the wiring path information after edition (S602). The wiring path information after edition is the wiring path information subjected to edition of the information on branching, the information on the section length, and information on coordinate information. Edition means a process of applying tolerance, extra length, and rounding for processing fractions of a numerical value or the like, and other processes.

Subsequently, the dimension adjuster 129 of the design support apparatus 100 performs a process of determining whether a line segment of the wire 501 is the branch line 513 (S603). Specifically, the dimension adjuster 129 acquires coordinates of the starting point and the end point of each line segment, and performs the determination process based on the acquired coordinates.

If it is determined that the line segment is the branch line 513 (S603: YES), then the dimension adjuster 129 performs a process of adding extra length and tolerance to the wiring path information acquired in S601 (S604). The values of the extra length and tolerance to be added are determined based on an externally acquired tolerance rule and the value of the extra length set in advance.

Upon completion of the process of S604, or if it is determined that the line segment is not the branch line 513 (S603: NO), the dimension adjuster 129 performs the process of creating the new wiring path information by applying the extra length, the tolerance, and the rounding to the wiring path information acquired in S601 (S605).

Then, the dimension adjuster 129 performs a process of determining whether the process of S603 to S605 has been performed on every data (S606). If it is determined that the process has not been performed on every data (S606: NO), then the flow returns to S603, and the above-described processes are performed again.

If it is determined that the process of S603 to S605 has been performed on every data (S606: YES), then the dimension adjuster 129 performs a process of determining whether a difference of the wiring path information between before and after the edition is equal to or less than a specified value set in advance (S607).

If it is determined that the difference of the wiring path information between before and after the edition is greater than the specified value (S607: NO), then the design support apparatus 100 performs a process of displaying an error message (S608). Then, the design support apparatus 100 cancels the process.

On the other hand, if it is determined that the difference of the wiring path information between before and after the edition is equal to or less than the specified value (S607: YES), then the design support apparatus 100 performs a process of outputting the wiring path information after edition (S609).

Upon completion of the process of dimension adjustment shown in FIG. 16, the design support apparatus 100 of the total support system 1 returns to the flow shown in FIG. 9, and performs a process of harness design drawing creation (S700).

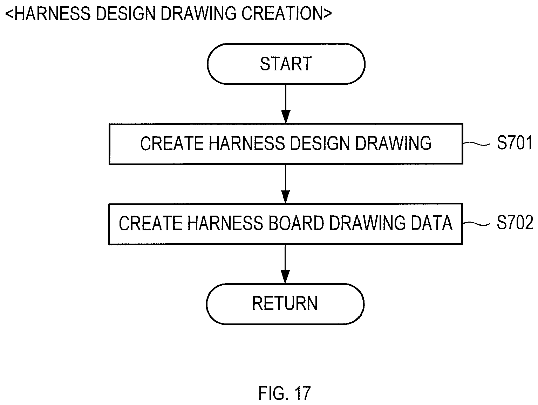

As shown in FIG. 17, the design support apparatus 100 performs a below-described process as the process of harness design drawing creation. First, the design support apparatus 100 performs a process of creating the harness design drawing (2D design data) based on the wiring information and the wire harness information (S701). The harness design drawing may be created based on the harness wiring diagram information, instead of the wire harness information.

The harness design drawing is created for each wire harness 500, and is created so as to have a specified size (e.g., JIS A3 size: 297 mm × 420 mm). Each wire harness 500 is represented in one drawing (drawing with a single product number). Alternatively, in a case where the wire harness 500 is large, it is represented in multiple drawings (drawings corresponding to the respective product numbers) in divided forms.

The shape of the wire harness 500 is represented in full scale (on a 1:1 scale) in the harness design drawing, so that the size of the wire harness 500 in the harness design drawing is the same as the actual size of the wire harness 500. The shape of the wire harness 500 in the harness design drawing is deformed (distorted and/or scaled down) so that the entire shape of the wire harness 500 is represented within a specified paper size (e.g., A3 size).

The design support apparatus 100 performs an arithmetic process for obtaining the scale of the harness design drawing, an angle of each branch line 513 with respect to the trunk line 511, and so on, based on the actual length of the wire harness 500, the specified paper size, and so on, and outputs the obtained results as the harness design drawing.

In the case where the harness design drawing is configured with multiple divided drawings, the design support apparatus 100 performs the arithmetic process for obtaining the scale, the angle of each branch line 513 with respect to the trunk line 511, and so on, also based on the number of the multiple divided drawings.

Upon creation of the harness design drawing, the board information section 131 of the design support apparatus 100 performs a process of creating the harness digital board information (harness board drawing data) (S702). The harness digital board information includes, for example, information on the two-dimensional drawing of the wire harness 500 created based on the wire harness information, information for identifying the wires 501 constituting the wire harness 500, and information for identifying the connector 502 to be attached to the wire 501.

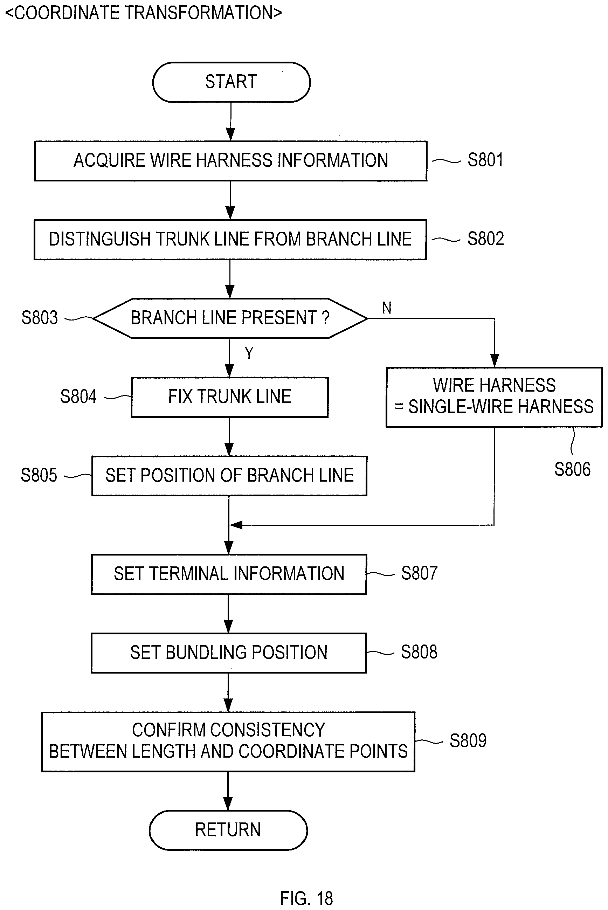

Upon completion of the process of harness design drawing creation shown in FIG. 17, the design support apparatus 100 returns to the flow shown in FIG. 9, and performs a process of coordinate transformation (S800). As shown in FIG. 18, the design support apparatus 100 performs a process of acquiring the wire harness information of the target wire harness 500 (S801).

Next, the design support apparatus 100 performs a process of distinguishing the trunk line 511 from the branch line 513 (S802), and then performs a process of determining whether the branch line 513 is present (S803). If it is determined that the branch line 513 is present (S803: YES), then the design support apparatus 100 performs a process of fixing the trunk line 511 (S804). In the process of fixing the trunk line 511, a process of fixing the section length of the trunk line 511 is also performed. Then, the design support apparatus 100 performs a process of setting a position of the branch line 513 (S805).

On the other hand, in the determination process of S803, if it is determined that the branch line 513 is not present (S803: NO), then the design support apparatus 100 performs a process of dealing with the wire harness 500 as a single-wire harness (S806).

Upon completion of the process of setting the position of the branch line 513, or upon completion of the process of dealing with the wire harness 500 as the single-wire harness, the coordinate transformer 133 of the design support apparatus 100 performs a process of setting terminal information (S807: coordinate transformation step). Specifically, the coordinate transformer 133 performs the process of converting information so that the branch line 513 extends in a direction perpendicular to the trunk line 511.

After performing the information conversion so that the branch line 513 extends in a direction perpendicular to the trunk line 511, the design support apparatus 100 may perform a process of adding a member (member addition step). Examples of the member to be added may include a label to be attached to the trunk line 511 and/or the branch line 513 of the wire harness 500, and/or a connector.

Such a process of adding the member after the coordinate transformation of S807 makes it easier to designate a position (coordinate) where the member such as the label and/or the connector is to be added, as compared with a case in which the coordinate transformation is not performed.

Subsequently, the design support apparatus 100 performs a process of setting a bundling position (S808). In other words, the design support apparatus 100 performs a process of setting a pealing size, and performs a process of confirming consistency between the length and coordinate points (S809).

Upon completion of the process of coordinate transformation shown in FIG. 18, the design support apparatus 100 returns to the flow shown in FIG. 9, and performs a process of harness board drawing creation (S900: manufacturing support step).

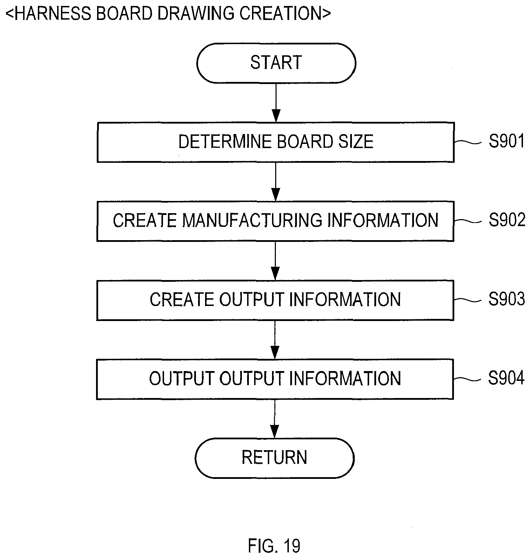

As shown in FIG. 19, the design support apparatus 100 performs a below-described process as the process of harness board drawing creation. First, the size information section 135 of the design support apparatus 100 performs a process of determining a board size (S901).

The size information section 135 performs the arithmetic process for setting the size information regarding the size of the board display 202. The board display 202 is the display surface on which the below-described drawing information is displayed, and is also the placement surface of the harness digital board 201 on which the wires 501 are placed when the wire harness 500 is fabricated.

Upon setting of the size information, the manufacturing information section 137 of the design support apparatus 100 performs a process of creating the manufacturing information including the drawing information (S902). The drawing information is displayed on the board display 202 of the harness digital board 201.

The wire harness 500 displayed based on the drawing information is displayed with the same length as the actual wire harness 500 in a longitudinal direction thereof (i.e., in full scale or on a 1:1 scale).

As for a radial direction or a width direction of the wire harness 500, the wire harness 500 may be displayed on the board display 202 with the same thickness or size as the actual wire harness 500. In this case, it is possible to visually recognize the degree of thickness of cables constituting the wire harness 500.

In addition, as compared with a case in which the wire harness 500 is not displayed with the same thickness or size, it is easier for the operator to notice that the number of the wires 501 arranged on the board display 202 is too large or too small when fabricating the wire harness 500. This facilitates reduction of operation errors in fabricating the wire harness 500.

Alternatively, as for the radial direction or the width direction of the wire harness 500, the wire harness 500 may be displayed with the size not based on the actual wire harness 500. Particularly in this case, if the sizes in the radial direction (width direction) of the trunk lines 511 and the branch lines 513 displayed on the board display 202 are all the same, then creation of the drawing information is facilitated.

In a case where the thickness of the displayed wire harness 500 is large, the displayed wire harness 500 is less likely to be hidden by the wires 501 arranged on the board display 202. This facilitates improvement of the workability in fabricating the wire harness 500.

The shapes of the trunk line 511 and the branch line 513 are deformed so that the wire harness 500 is displayed within a frame having a size defined by the size information. There may be a case in which a plurality of the wire harnesses 500 is displayed on the board display 202 at a time.

Upon creation of the manufacturing information, the gauge information section 139 of the design support apparatus 100 performs the arithmetic process for creating the gauge information regarding the tolerance gauge 631. The gauge information is the information for displaying the tolerance gauge 631 on the board display 202. The created gauge information is included in the drawing information.

As shown in FIG. 7, the tolerance gauge 631 shows the tolerable limits of the position where each of the starting point and the end point, which are respectively one end and the other end of the wire 501, is located when each wire 501 is arranged on the board display 202 of the harness digital board 201. A position where the tolerance gauge 631 is displayed may be designated by the gauge information section 139, or may be changed or designated by the operator.

In the present embodiment, an example will be described in which the tolerance gauge 631 is displayed as a grid configured with frames having a specified pitch. Examples of the specified pitch may include a pitch of 5 mm. The tolerance gauge 631 shown in FIG. 7 indicates a plus tolerance and a minus tolerance. Instead, the tolerance gauge 631 may indicate only a plus tolerance or only a minus tolerance.

A mode of displaying the tolerance gauge 631 is not limited to that as the grid like the tolerance gauge 631 of the present embodiment, as long as the range of tolerance is thereby clarified. For example, the mode of displaying the tolerance gauge 631 may be combination of line segments, or may be a mere outline, which is an outer frame of the grid.

Upon creation of the manufacturing information, the design support apparatus 100 performs a process of creating output information (S903). The output information is created based on the manufacturing information. The output information includes CAD data created based on the drawing information and electronic data allowing the drawing information to be displayed on various information terminals in, for example, a portable document format (PDF), information on a bill of materials (hereinafter referred to as BOM information), and wiring information for manufacturing.

Upon creation of the output information, the design support apparatus 100 performs a process of outputting the output information (S904). The created output information is transmitted to a production site where the manufacturing support apparatus 200 is installed.

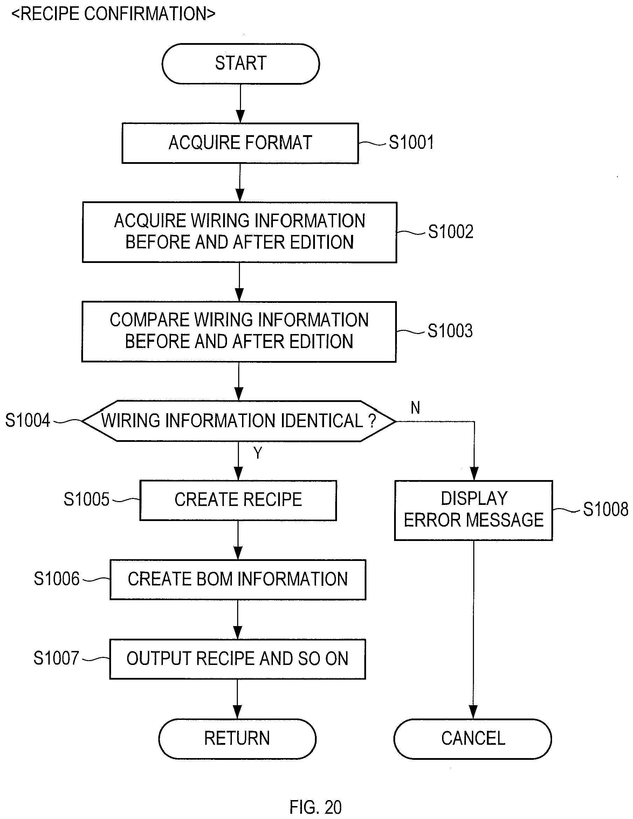

Upon completion of the process of harness board drawing creation shown in FIG. 19, the design support apparatus 100 performs a process of automatically creating the manufacturing recipe and a process of confirming whether the created manufacturing recipe and the wiring information are consistent with each other (S1000). First, as shown in FIG. 20, the design support apparatus 100 performs a process of acquiring a format of the manufacturing recipe (S1001).

Next, the design support apparatus 100 performs a process of acquiring the wiring information before edition and the wiring information after edition (S1002), and then performs a process of comparing the wiring information before edition with the wiring information after edition (S1003). The design support apparatus 100 performs a process of determining whether the wiring information before edition is identical with the wiring information after edition based on a comparison result (S1004).

If it is determined that the wiring information before edition is identical with the wiring information after edition (S1004: YES), then the recipe creator 141 of the design support apparatus 100 performs a process of creating the manufacturing recipe based on the wiring information (S1005).

Upon creation of the manufacturing recipe, the design support apparatus 100 performs a process of creating the BOM information (S1006). Here, the BOM information is for use in preparing members, such as the wire 501 and the connector 502, required to fabricate the wire harness 500. Upon creation of the manufacturing recipe and the BOM information, the design support apparatus 100 performs a process of storing and outputting the manufacturing recipe and the BOM information (S1007).

In the determination process of S1004, if it is determined that the wiring information before edition is not identical with the wiring information after edition (S1004: NO), then the design support apparatus 100 performs a process of displaying an error message (S1008). Then, the design support apparatus 100 cancels the process.

Upon completion of the process of recipe confirmation shown in FIG. 20, the total support system 1 returns to the flow shown in FIG. 9, and performs a process of wire harness manufacturing (S1100: manufacturing support step).

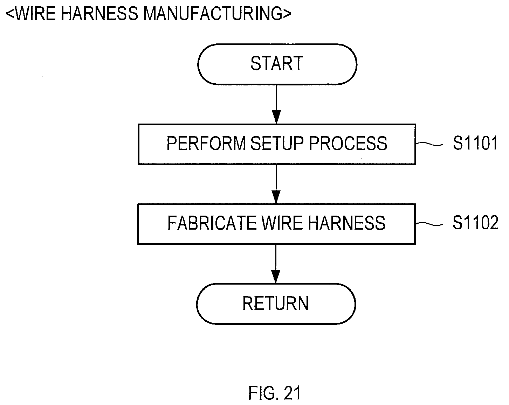

The manufacturing support apparatus 200 of the total support system 1 performs a below-described process as the process of wire harness manufacturing. First, as shown in FIG. 21, the control computer 211 of the manufacturing support apparatus 200 performs a setup process for preparing fabrication of the wire harness 500 based on the transmitted output information (S1101).

Upon completion of the setup process, the control computer 211 performs a fabrication process of the wire harness 500 (S1102). In the fabrication process, the control computer 211 performs a process of displaying, on the board display 202, the drawing information, the gauge information, and the identifier corresponding to the fabrication step of the wire harness 500.

The tolerance gauge 631 displayed based on the gauge information is displayed in a specified position on the board display 202 by the control computer 211. Specifically, the tolerance gauge 631 is displayed in the vicinity of a position where each of the starting point and the end point, which are respectively one end and the other end of the wire 501, is arranged.

The control computer 211 performs a process of acquiring the information on the identifier read by the reader 231 and storing the acquired information in the data server 221 together with the information for identifying the wire harness 500 and with information on the manufacturing date and time, the manufacturing place, and so on. Examples of the identifier to be read by the reader 231 may include an identifier including information for identifying the wire 501 and the connector 502 to be attached to the wire 501.

Furthermore, the control computer 211 controls the wire cutter 241 and the printer 251 in response to acquisition of the information on the identifier, and supplies the wire 501 of a desired type cut into a desired length. The supplied wire 501 is arranged on the board display 202 for further process of fabricating the wire harness 500.

The BOM information included in the output information is used to prepare the members, such as the wire 501 and the connector 502, required to fabricate the wire harness 500. In the wiring information for manufacturing, arrangement of pieces of information has been changed so as to correspond to the processing order in fabricating the wire harness 500. The wiring information for manufacturing is also referred to as a recipe.

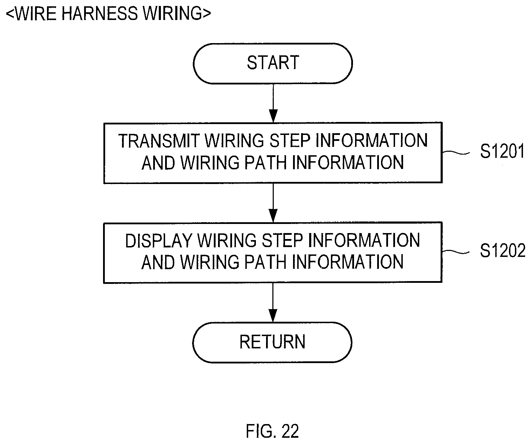

Upon completion of the process of wire harness manufacturing, the manufactured wire harness 500 is transported to a site where the vehicle body of the railway vehicle is produced. As shown in FIG. 22, the information processing terminal 300 of the total support system 1 performs a process of supporting wiring of the wire harness 500 (S1200: wiring support step).

In the process of supporting wiring of the wire harness 500, first, the wiring step information and the wiring path information are transmitted from the design support apparatus 100 to the information processing terminal 300 (S1201). The transmitted wiring step information and wiring path information are stored in the terminal storage 301.

The terminal controller 311 of the information processing terminal 300 performs control for displaying the wiring step information and the wiring path information corresponding to the wiring step for the wire harness 500 (S1202). Specifically, the terminal controller 311 performs control for displaying, on the terminal display 321, pieces of the information broadly classified as assembling order steps of the wire harness 500, in the order of operations.

The information processing terminal 300 may display, on the terminal display 321, the digitized drawing information included in the output information. The information processing terminal 300 can be used for operation in the wiring site, or also for education of wiring operators.

In some cases, the wiring information, which is the base of the wire harness designing, has a different format depending on a creator of the wiring information. If the format is different, a place for referring to each piece of the wiring information can differ. This makes it troublesome to acquire information required for the designing, thus increasing the time required for the wire harness designing. In addition, this might cause human error in the wire harness designing.

On the other hand, in the total support system 1 configured as above, the 2D design data of the wire harness 500 can be created based on the 3D design data, the basic wiring information, and the specified rule. In other words, the 2D design data can be created by acquiring the basic wiring information having the format unsuitable for designing the wire harness 500 three-dimensionally and the specified rule, instead of the wiring information having the format suitable for designing the wire harness 500 three-dimensionally.

The rule is based on the conversion rule data. This makes it easier to perform the conversion process for converting the basic wiring information into the wiring information using an arithmetic processing unit such as a computer, as compared with a case in which the rule is not based on the conversion rule data.

The rule is selected based on a result of identifying contents of the basic wiring information. This makes it easier to create the wiring information more appropriately based on the basic wiring information and the rule, as compared with a case in which the rule is not determined based on the identified contents.

Creation of creation information enables identification of whether the wiring information is created based on the basic wiring information and the rule. Furthermore, if information on the date and time of creation or the like is included in the creation information, the date and time of creation can also be identified.

In the wire harness designing, the operation of selecting the wires 501 to be wire-harnessed (i.e., to be bundled into the wire harness 500) in consideration of the same place, device, and type of an electrical circuit (e.g., an AC wire, a DC wire, and a shield wire) has been an operation requiring time and effort. Moreover, unless selection of the wires 501 is completed, it is impossible to proceed to the next step.

The movable body has symmetry and/or similarity in terms of the layout of multiple devices (for example in the railway vehicle, between the respective train cars and/or between the right side and the left side); thus, the harness structure has to be designed in view of such symmetry and/or similarity. Selection of the wires 501 from the great number of the wires 501 for wire-harnessing in view of such symmetry and/or similarity has further complicated the operation.

To cope with this, combination of the wires 501 to be bundled as the wire harness 500 is determined based on the area information or the use information. This facilitates determination on more appropriate combination of the wires 501, as compared with a case in which such determination is not based on the area information or the use information. More specifically, this enables designing of the wire harness 500 in view of its symmetry and/or similarity.

Wire harness identification information is added to the wiring information. This makes it easier to identify the wire harness 500 to which each wire 501 belongs from the wiring information, as compared with a case in which the wire harness identification information is not added.

The virtual wire is set based on the connection-target device information, and the wire harness 500 is designed using the virtual wire. This facilitates reduction of the time required for the wire harness designing, as compared with a case in which the virtual wire is not used.

The size information indicating the diameter or the like of the wire 501 is added to the wiring information, and the diameter of the virtual wire is calculated based on the size information. This facilitates improvement of the accuracy of the wire harness 500 to be designed, as compared with a case in which the diameter is not calculated.

The symbol, such as a character, code, or number, assigned to each device is included in the connection-target device information. This facilitates identification of the device, as compared with a case in which the symbol, such as a character, code, or number, is not included.

3D connector data, which is three-dimensional data of the connector 502, is created, and the data is named such that the device to which the connector 502 is to be connected can be identified. This makes it easier to recognize the correspondence relationship between the connector 502 and the device. In addition, as compared with a case in which the name of the data is entered manually, time saving is facilitated, and reduction of occurrence of human error, such as erroneous entry of the name, is facilitated.

The 3D connector data may be named such that the device to which the connector 502 is to be connected can be identified as described above, or 2D connector data may be named such that the device to which the connector 502 is to be connected can be identified.

A coordinate system in the 2D design data is transformed to another coordinate system, and the member is added based on such another coordinate system. This makes it easier to perform the process of adding the member, as compared with a case in which the member is added based on the original coordinate system.

The technical scope of the present disclosure is not limited to the above-described embodiment, and various modifications can be made without departing from the gist of the present disclosure. For example, an object to which the wire harness 500 is wired in the above-described embodiment may be a car body of an automobile, an airframe of an aircraft, a hull of a ship, or the like, and is not limited to the railway vehicle.

## Claims

1. A design support method for a wire harness (500), the method comprising:
a design step (S401, S402, S403, S404, S405, S406) of designing the wire harness (500) comprising a plurality of wires (501) to be wired to a movable body and of creating design data of the wire harness (500), based on design data of the movable body and on wiring information regarding the plurality of wires (501); and
a format conversion step (Sill, S112, S113) of creating the wiring information based on basic wiring information regarding the plurality of wires (501) and on a specified rule.

2. The design support method for a wire harness (500) according to claim 1, wherein the specified rule is based on conversion rule data for converting the basic wiring information into the wiring information.

3. The design support method for a wire harness (500) according to claim 1, wherein the specified rule is selected based on a result of identifying contents of the basic wiring information.

4. The design support method for a wire harness (500) according to any one of claims 1 to 3, the method further comprising a creation information step (S105) of creating creation information enabling identification that the wiring information is created based on the basic wiring information and on the specified rule.

5. The design support method for a wire harness (500) according to any one of claims 1 to 4,
wherein the wiring information comprises area information specifying an area where a device to which each wire (501) of the plurality of wires (501) is connected is mounted, or use information specifying a use type of each wire (501) of the plurality of wires (501), and
wherein the design support method further comprises a harnessing determination step (S118) of determining, from the plurality of wires (501), combination of wires (501) to be bundled as the wire harness (500), based on the area information or on the use information.

6. The design support method for a wire harness (500) according to claim 5, the method further comprising an identification information addition step (S118) of adding, to the wiring information regarding the wires (501), wire harness identification information enabling identification of the wire harness (500) to which the wires (501) belong, based on a result of determination in the harnessing determination step (S118).

7. The design support method for a wire harness (500) according to any one of claims 1 to 6,
wherein the wiring information comprises connection-target device information for identifying a device to which each wire (501) of the plurality of wires (501) is connected, and
wherein the design support method further comprises a virtual wire setting step (S209) of setting a virtual wire used in designing the wire harness (500), the virtual wire being generated by grouping at least part of the plurality of wires (501) based on the connection-target device information.

8. The design support method for a wire harness (500) according to claim 7,
wherein the wiring information comprises size information regarding a diameter or a radius of each wire (501) of the plurality of wires (501), and
wherein the design support method further comprises a diameter calculation step (S210) of calculating a diameter of the virtual wire based on the size information.

9. The design support method for a wire harness (500) according to claim 7 or 8,
wherein the connection-target device information included in the wiring information comprises a symbol assigned to each device.

10. The design support method for a wire harness (500) according to any one of claims 1 to 6,
wherein the wiring information comprises:
connector information specifying a connector (502) to be provided to an end of each wire (501) of the plurality of wires (501); and
connection-target device information specifying the device to which the connector (502) is connected, and
wherein the design support method further comprises a connector data creation step (S213) of creating connector data of the connector (502) for each wire (501) of the plurality of wires (501), and of setting a file name of the connector data so as to enable identification of the device to which the connector (502) is connected, based on the wiring information.

11. The design support method for a wire harness (500) according to any one of claims 7 to 9,
wherein the wiring information comprises:
connector information specifying a connector (502) to be provided to an end of each wire (501) of the plurality of wires (501); and
connection-target device information specifying the device to which the connector (502) is connected, and
wherein the design support method further comprises a connector data creation step (S213) of creating connector data of the connector (502) for each virtual wire, and of setting a file name of the connector data so as to enable identification of the device to which the connector (502) is connected, based on the wiring information.

12. The design support method for a wire harness (500) according to any one of claims 1 to 11, the method further comprising:
a coordinate transformation step (S807) of transforming, after the design step (S401, S402, S403, S404, S405, S406), the design data of the wire harness (500) from a coordinate system used in the design step (S401, S402, S403, S404, S405, S406) to another coordinate system; and
a member addition step of adding, when adding a member to the design data of the wire harness (500) subjected to coordinate transformation in the coordinate transformation step (S807), the member based on the another coordinate system.

13. The design support method for a wire harness (500) according to any one of claims 1 to 12, the method further comprising:
a manufacturing support step (S900, S1100) of displaying longitudinal information of the wire harness (500) in full scale when displaying information indicating a manufacturing method of the wire harness (500) that is based on the design data of the wire harness (500) created through the design step (S401, S402, S403, S404, S405, S406), and of manufacturing the wire harness (500) based on the information displayed; and
a wiring support step (S1200) of displaying, on a portable information processing terminal (300), wiring step information regarding steps of wiring the wire harness (500) to the movable body, and of wiring, to the movable body, the wire harness (500) manufactured through the manufacturing support step (S900, S1100), with reference to the wiring step information displayed.
